# EUROPÄISCHE PATENTSCHRIFT

(11) **EP 1 538 069 B1**
(45) Veröffentlichungstag und Bekanntmachung des Hinweises auf die Patenterteilung: **10.03.2010**
(21) Anmeldenummer: 04024354.5
(22) Anmeldetag: 13.10.2004
(51) Int. Cl.: B62D 25/18, B60K 11/08, B60R 19/00

(54) **Radhausschale für ein Kraftfahrzeug**
Wheel-arch lining pannel for a vehicle
Coque pour passage de roue d'un véhicule

(30) Priorität: 02.12.2003 DE 10356238
(43) Veröffentlichungstag der Anmeldung: 08.06.2005
(73) Patentinhaber: Dr. Ing. h.c. F. Porsche Aktiengesellschaft, 70435 Stuttgart (DE)
(72) Erfinder: Sebastian, Bernd, 71272 Renningen (DE)

(56) Entgegenhaltungen:
- DE-A1- 10 159 783
- JP-A- 2004 338 602
- PATENT ABSTRACTS OF JAPAN Bd. 009, Nr. 046 (M-360), 27. Februar 1985 (1985-02-27) -& JP 59 184067 A (NISSAN JIDOSHA KK), 19. Oktober 1984 (1984-10-19)

## Beschreibung

Die Erfindung betrifft eine Radhausschale für ein Kraftfahrzeug, die im Wesentlichen der Kontur des Radhauses angepasst und an diesem befestigt ist, wobei an der Radhausschale örtlich eine Lamellen/Kiemen aufweisende Kühlluftaustrittsöffnung vorgesehen ist.

Rotierende Räder an einem Kraftfahrzeug wirbeln im Fahrbetrieb eine große Menge von Partikeln, wie Steine, Schmutz, Schnee, Wasser oder dgl. auf. Diese werden zum Teil nach hinten abgeschleudert, zum Teil aber auch in das Radhaus gefördert und dort entlang der Radhausschalenwand in Raddrehrichtung tangential abgeschleudert. Durch die hohe Bewegungsenergie der Teilchen rutschen diese entlang der Radhausschalenwand weiter, fallen nach unten wieder heraus oder aber treten in konstruktive Öffnungen der Radhausschale ein. Diese sind z.B. als Kühlluftaustrittsöffnungen ausgeführt und decken in Lamellen- bzw. Kiemenform dahinterliegende empfindliche Bauteile wie Lüfterblätter, Lüftermotoren, Steuergeräte, Kühlernetze oder dgl. zum Teil ab.

Die Art der Versperrung ist in erster Linie nach thermodynamischen und aerodynamischen Gesichtspunkten gewählt, so dass ein Eintreten von Partikeln häufig nicht in ausreichendem Maße verhindert werden kann. Besonders kritisch wird die Situation, wenn eintretende Partikel auf Dauer nicht mehr abfließen können, da es keine zusätzlichen Öffnungen nach unten gibt. Der Raum hinter den Lamellen/Kiemen setzt sich also immer mehr mit Partikeln zu. Die Folge für diese Bauteile ist eine Funktionsbeeinträchtigung (Lüftergeräusche-, Lüfterunwucht, Wirkungsgradverlust etc.) bzw. auf Dauer ein möglicher Totalausfall durch mechanische Beschädigung oder Korrosion.

Die gattungsgemäße DE 101 59 783 A1 offenbart ein Radhaus für ein Vorderrad eines Fahrzeuges, wobei an einer vorderen Radhausquerwand örtlich Ausnehmungen vorgesehen sind, durch die aus einem seitlichen Kühler austretende erwärmte Kühlluft in das Radhaus abgeführt wird. Dabei sind den Ausnehmungen kiemenartige Luftleitelemente nachgeschaltet, welche zugleich ein Austreten von Schmutz oder Schmutzwasser aus dem Radhaus in den Bereich des seitlichen Kühlers unterbinden sollen. Bei dieser Anordnung sind die Ausnehmungen und die nachgeschalteten Luftleitelemente unmittelbar an der aufbauseitigen Radhausquerwand ausgebildet. Eine der Kontur des Radhauses angepasste und am Radhaus befestigte separate Radhausschale ist dieser Anordnung nicht zu entnehmen.

Die JP 59-184067 A zeigt einen mit einem Kühler versehenen bugseitigen Luftführungskanal für ein Fahrzeug, wobei die durch eine bugseitige Öffnung eintretenden Kühlluft nach Durchströmen des Kühlers über Ausströmöffnungen zur Fahrbahn und zum vorderen Radhaus hin abgeleitet wird.

Aufgabe der Erfindung ist es, an einer Radhausschale eines Kraftfahrzeuges solche Vorkehrungen zu treffen, dass das Eindringen von Partikeln in die Kühlluftaustrittsöffnungen zuverlässig verhindert wird, ohne etwas an der Form und Lage der Lamellen/Kiemen zu verändern, so dass die volle thermodynamische und aerodynamische Wirksamkeit erhalten bleibt.

Erfindungsgemäß wird diese Aufgabe durch die Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, dass durch die der Kühlluftaustrittsöffnung vorgelagerte Anordnung eines Abweisers an der dem Rad zugewandten Radhausschalenwand das Eindringen von Partikeln in die Kühlluftaustrittsöffnung zuverlässig verhindert wird, ohne etwas an der Form und Lage der Lamellen/Kiemen zu verändern. Die vom Rad direkt abfliegenden und an der Radhausschalenwand entlanggleitenden Partikel werden oberhalb der Lamellen/Kiemen durch einen schmalen Abweiser in Dachform mit vorgesetzter Ablaufrinne aufgefangen und dann zur Seite weggelenkt. Die Partikel können somit nicht in die Kühlluftaustrittsöffnungen gelangen. Die Ablaufrinnen des Abweisers sind nach innen in die Radhausschale eingeprägt und ragen dann nur wenig in das Radhaus hinein, somit bleibt der Radfreigang erhalten. Der Abweiser ist darüber hinaus elastisch ausgeführt.

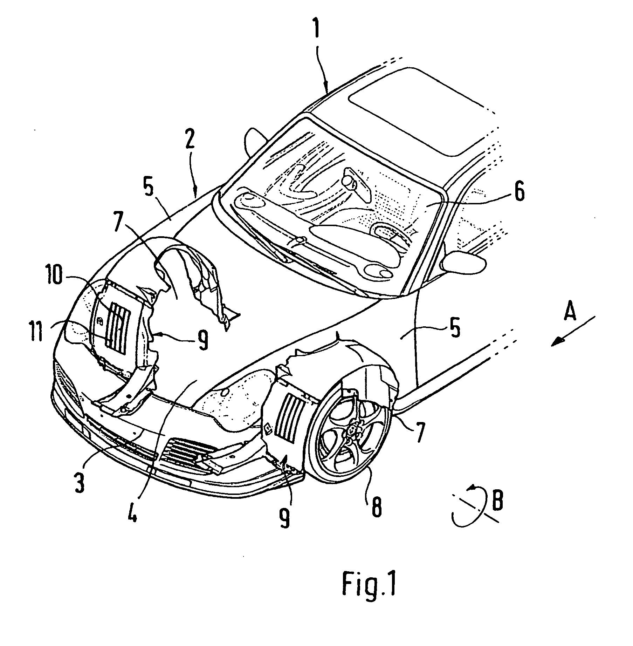

In der Zeichnung wird ein Ausführungsbeispiel der Erfindung näher erläutert. Es zeigt
- Fig. 1: eine perspektivische Teilansicht von schräg vorne auf ein Kraftfahrzeug, das im Bereich der Radhäuser eingesetzte Radhausschalen aufweist,
- Fig. 2: eine Seitenansicht auf das vordere Radhaus mit der eingesetzten Radhausschale,
- Fig. 3: eine Ansicht in Pfeilrichtung R der Fig. 2 mit der erfindungsgemäßen Radhausschale,
- Fig. 4: einen Schnitt nach der Linie IV-IV der Fig. 3.

Das durch einen Personenwagen gebildete Kraftfahrzeug 1 weist einen Aufbau 2 auf, der im dargestellten Bereich ein Bugendteil 3, eine vordere Haube 4, Seitenteile 5 und eine Windschutzscheibe 6 umfasst.
Im Bereich der Seitenteile 5 sind jeweils Radhäuser 7 ausgebildet, die Räder 8 aufnehmen. In jedes Radhaus 7 ist eine vorzugsweise aus Kunststoff gefertigte ein- oder mehrteilig ausgebildete Radhausschale 9 eingesetzt und daran befestigt. An jeder Radhausschale 9 ist in einem unteren, in Fahrtrichtung A gesehen, vorne liegenden Bereich eine Kühlluftsaustrittsöffnung 10 vorgesehen, die mehrere vorzugsweise vertikal ausgebildete Lamellen oder Kiemen 11 aufweist. Durch die Kühlluftaustrittsöffnung 10 wird erwärmte Kühlluft ins Radhaus 7 bzw. zur Fahrzeugseite hin geleitet. Die Lamellen/Kiemen 11 sind hierfür entsprechend geformt.

Damit hinter der Kühlluftaustrittsöffnung 10 angeordnete Bauteile wie Lüfterblätter, Lüftermotoren, Steuergeräte oder dgl. nicht durch im Radhaus 7 herumgeschleuderte Partikel beschädigt werden, ist vorgesehen, dass in Raddrehrichtung B gesehen der Kühlluftaustrittsöffnung 10 vorgelagert an der Radhausschalenwand 13 ein Abweiser 12 ausgebildet ist, durch den die direkt vom Rad 8 abfliegenden und an der Radhausschalenwand 13 entlanggleitenden Partikel seitlich um die Kühlluftaustrittsöffnung 10 herumgeleitet werden.

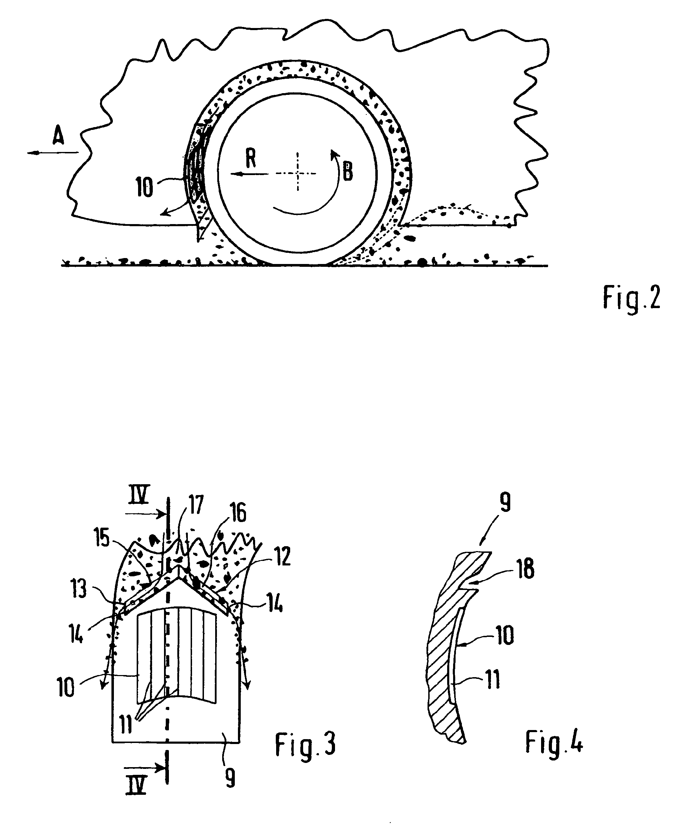

Gemäß Fig. 2 ist der Abweiser 12 dachförmig ausgebildet, wobei die freien Enden 14 beider Schenkel 15, 16 des Abweisers 12 die Kühlluftaustrittsöffnung 10 in Querrichtung gesehen überragen und die Spitze 17 des Abweisers 12 höher liegt als die freien Enden 14 der Schenkel 15, 16.

Beide Schenkel 15, 16 des dachförmigen Abweisers 12 sind im Ausführungsbeispiel als versenkt angeordnete Ablaufrinnen 18 ausgebildet. Die Ablaufrinnen 18 sind im Querschnitt gesehen U-förmig, V-förmig oder dgl. profiliert. Durch die versenkte Ausbildung bleibt der Radfreigang erhalten.

Es besteht jedoch auch die Möglichkeit, den Abweiser 12 erhaben auszubilden, das heißt, der Abweiser 12 steht geringfügig gegenüber der Kontur der Radhausschalenwand 13 vor.

## Patentansprüche

1. Radhausschale (9) für ein Kraftfahrzeug(1), die im Wesentlichen der Kontur des Radhauses (7) angepasst und an diesem befestigt ist, wobei an der Radhausschale (9) örtlich eine Lamellen/Kiemen (11) aufweisende Kühlluftaustrittsöffnung (10) vorgesehen ist, wobei in Raddrehrichtung (B) gesehen der Kühlluftaustrittsöffnung (10) vorgelagert an der dem Rad (8) zugewandten Seite der Radhausschalenwand (13) ein Abweiser (12) ausgebildet ist, durch den die direkt vom Rad (8) abfliegenden und an der Radhausschalenwand (13) entlang gleitenden Partikel seitlich um die Kühlluftaustrittsöffnung (10) herumgeleitet werden, **dadurch gekennzeichnet, dass** der Abweiser (12) dachförmig oberhalb der Kühlluftaustrittsöffnung (10) angeordnet ist.

2. Radhausschale nach Anspruch 1, **dadurch gekennzeichnet, dass** beide Schenkel (15, 16) des dachförmigen Abweisers (12) die Kühlluftaustrittsöffnung (10) in Querrichtung gesehen überragen.

3. Radhausschale nach Anspruch 2, **dadurch gekennzeichnet, dass** die beiden schräg verlaufenden Schenkel (15, 16) des Abweisers (12) jeweils eine versenkt angeordnete Ablaufrinne (18) bilden, wobei jede Ablaufrinne (18) im Querschnitt gesehen etwa U-förmig, V-förmig oder dgl. profiliert ist.

4. Radhausschale nach einem der vorangegangenen Ansprüche, **dadurch gekennzeichnet, dass** der Abweiser (12) erhaben an der Radhausschalenwand (13) ausgebildet ist.

## Claims

1. Wheel arch lining panel (9) for a motor vehicle (1), which wheel arch lining panel (9) is substantially matched to the contour of the wheel arch (7) and is fastened to the latter, with a cooling air outlet opening (10) which has lamellae/gills (11) being provided locally on the wheel arch lining panel (9), with a deflector (12) being formed, preceding the cooling air outlet opening (10) as viewed in the wheel rotational direction (B), on that side of the wheel arch lining panel wall (13) which faces toward the wheel (8), by means of which deflector (12) the particles flung directly from the wheel (8) and the particles sliding along the wheel arch lining panel wall (13) are conducted laterally around the cooling air outlet opening (10), **characterized in that** the deflector (12) is arranged in the shape of a roof above the cooling air outlet opening (10).

2. Wheel arch lining panel according to Claim 1, **characterized in that** the two limbs (15, 16) of the roof-shaped deflector (12) project beyond the cooling air outlet opening (10) as viewed in the transverse direction.

3. Wheel arch lining panel according to Claim 2, **characterized in that** the two obliquely running limbs (15, 16) of the deflector (12) form in each case one recessed outflow channel (18), with each outflow channel (18) being of approximately U-shaped, V-shaped or similar profile as viewed in cross section.

4. Wheel arch lining panel according to one of the preceding claims, **characterized in that** the deflector (12) is formed in an elevated fashion on the wheel arch lining panel wall (13).

## Revendications

1. Coque pour passage de roue (9) d'un véhicule automobile (1), qui est adaptée essentiellement au contour du passage de roue (7) et qui est fixée à celui-ci, une ouverture de sortie d'air de refroidissement (10) présentant des lamelles/parties amincies (11) étant prévue localement sur la coque pour passage de roue (9), un déflecteur (12) étant réalisé sur le côté de la paroi (13) de la coque pour passage de roue tourné vers la roue (8), avant l'ouverture de sortie d'air de refroidissement (10) vu dans le sens de rotation de la roue (B), ce déflecteur permettant de dévier les particules projetées directement par la roue (8) et glissant le long de la paroi (13) de la coque pour passage de roue autour de l'ouverture de sortie d'air de refroidissement (10), **caractérisée en ce que** le déflecteur (12) est disposé en forme de toit au-dessus de l'ouverture de sortie d'air de refroidissement (10).

2. Coque pour passage de roue selon la revendication 1, **caractérisée en ce que** deux branches (15, 16) du déflecteur (12) en forme de toit dépassent au-dessus de l'ouverture de sortie d'air de refroidissement (10), vu dans la direction transversale.

3. Coque pour passage de roue selon la revendication 2, **caractérisée en ce que** les deux branches (15, 16) du déflecteur (12) s'étendant obliquement forment à chaque fois une rigole d'écoulement (18) renfoncée, chaque rigole d'écoulement (18), vue en section transversale, étant approximativement en forme de U, en forme de V ou profilée de manière similaire.

4. Coque pour passage de roue selon l'une quelconque des revendications précédentes, **caractérisée en ce que** le déflecteur (12) est réalisé de manière rehaussée sur la paroi (13) de la coque pour passage de roue.
